# EUROPEAN PATENT APPLICATION

(11) **EP 4 209 453 A1**
(43) Date of publication of application: **12.07.2023**
(21) Application number: 22150904.5
(22) Date of filing: 11.01.2022
(51) Int. Cl.: C01B 21/26, C01B 21/28, B01D 53/56, C01B 21/38

(54) **DUAL PRESSURE SYSTEM FOR PRODUCING NITRIC ACID AND METHOD OF OPERATING THEREOF**

(71) Applicant: Yara International ASA, 0277 Oslo (NO)
(72) Inventor: Vigeland, Bent, Skien (NO); Øien, Halvor, Porsgrunn (NO); Fauconnier, Peter, Grimbergen (BE); de Smet, Andre, Terneuzen (NL)
(74) Representative: De Clercq & Partners

(57) **Abstract**

The present disclosure discloses a system for producing nitric acid at reduced power, the system being a standard dual pressure nitric acid plant characterised in that the system further comprises means for splitting (55) a stream of tail gas downstream an absorption tower (41) into a first tail gas stream (10), in fluid communication with an oxygen-rich gas (50) upstream the ammonia mixing unit (35), and a second tail gas stream (80), and means for adjusting the amount of tail gas (5) being splitted into the first tail gas stream (10) and the second tail gas stream (80), such that an air compressor (36) is not required. The present disclosure further relates to a method for operating the system, to the use of the system of the disclosure for performing the method of the disclosure and to a method for revamping a standard dual pressure nitric acid plant into the system of the disclosure.

## Description

### Field

The present disclosure relates to the field of nitric acid production in a dual pressure plant.

### Introduction

Pure nitric acid is a clear, colorless liquid with a strong odor. Nitric acid is produced in large quantities principally by catalytic oxidation of ammonia (Ostwald process). Ammonia is converted to nitric acid in several stages. The ammonia is first oxidized in an ammonia burner on platinum gauzes (commonly called ammonia converter) or cobalt balls, producing nitric oxide (in this disclosure also called nitrogen monoxide (NO)) and water:

4 NH₃ (g) + 5 O₂ (g) → 4 NO (g) + 6 H₂O (g) (1)

The reaction product from (1), nitric oxide, following cooling, is then oxidized to nitrogen dioxide (NO₂) and further to dinitrogen tetroxide N₂O₄ (g) in an oxidation section:

2 NO (g) + O₂ (g) → 2 NO₂ (g) (2)

2 NO₂ (g) → N₂O₄ (g) (3)

Cooling of nitrogen oxide gases is accomplished first through the use of a waste heat recovery system recovering the heat from the conversion of ammonia into nitric oxide, then through the use of a cooler condenser in which condensed nitric acid is separated from nitric oxide, nitrogen dioxide and dinitrogen tetroxide and nitric acid gases, collectively called NOₓ gases, and finally by heating the tail gas released at the outlet of the absorption tower in which the NOₓ gases are absorbed.

By absorption in water, following compression through a NOₓ gas compressor, nitrogen dioxide and dinitrogen tetroxide are converted to nitric acid and nitric oxide:

3 NO₂ (g) + H₂O (I) → 2 HNO₃(aq) + NO(g) (4)

3 N₂O₄ (g) + 2 H₂O (I) → 4 HNO₃ (aq) + 2 NO (g) (5)

Weak nitric acid which is up to 68 % (azeotrope) is obtained. Through a rectification process the concentration of nitric acid can be increased up to 99 % concentrated nitric acid. The total reaction is given by the following formula:

NH₃ + 2 O₂ → HNO₃ + H₂O (6)

The main process units in a nitric acid production plant, include an ammonia converter (conversion of ammonia into nitric oxides using oxygen over a suitable catalyst), an oxidation section (conversion of nitric oxide into nitrogen dioxide and nitrogen tetroxide), an absorber unit (for the absorption of NOₓ gases into water) and a bleacher unit (removal of unreacted dissolved gases, containing in particular NOₓ and gases, from the aqueous nitric acid solution, which give it its typical brownish color).

The process for the production of nitric acid can be differentiated into a mono pressure (single-pressure) and dual pressure (split-pressure) process.

In a dual pressure process, the absorber unit operates at a higher working pressure than the ammonia converter. Modern dual pressure processes feature a low-pressure ammonia converter operating typically at 2 to 6 bara, and a high-pressure absorber unit operating at 9 to 16 bara.

A dual pressure process requires an air compressor to feed low-pressure air (which comprises about 21 vol% of oxygen) to the converter, and a NOₓ gas compressor to feed high-pressure NOₓ gases to the absorber unit. The working pressure of an air compressor is from 2 to 6 bara, inclusive, and the working pressure of a NOₓ gas compressor is from 9 to 16 bara, inclusive.

The drive power for the air compressor typically originates from a tail gas turbine and a steam turbine or a power source such as an electric motor. Accordingly, the compressor train of a dual pressure nitric acid production plant typically comprises an air compressor, a NOₓ gas compressor, a tail gas turbine, and a steam turbine or a power source such as an electric motor.

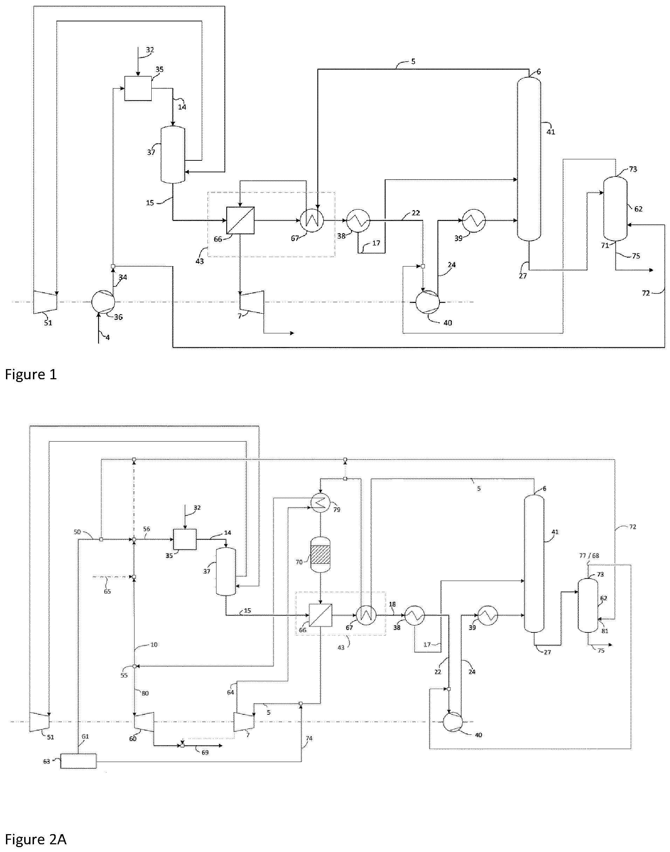

More in detail, referring to Figure 1, a dual pressure plant and process according to the prior art works as follows. Gaseous ammonia **32,** optionally pre-heated in a pre-heater unit (not shown) is mixed with compressed air **34** pressurised to a low pressure using an air compressor **36,** in a mixing apparatus **35,** and the resulting ammonia/oxygen-enriched air mixture **14** is fed to an ammonia converter **37,** operating at a low pressure, where ammonia is oxidized over a suitable catalyst, thus obtaining a LP NOₓ gas/steam mixture **15,** comprising water and nitric oxide (NO). The heat of the mixture coming out of the ammonia converter is recovered, after which the NOₓ gas/stream mixture is subsequently cooled down in a gas cooler/condenser **38** to temperature where the water condenses, and an aqueous diluted nitric acid mixture **17** is separated from a gaseous NOₓ stream **22.** The gaseous NOₓ stream **22** is sent to a NOₓ gas compressor **40** wherein its pressure is elevated from a low pressure to a high pressure, being about equal to an absorber unit, **41,** operating pressure, and the pressurized gaseous NOₓ stream **24** is sent to the absorber to the absorber unit **41,** commonly called absorption tower. The pressurised NOₓ gas stream **24** is further oxidized to further convert the NO to NO₂ and N₂O₄, cooled in an additional gas cooler/condenser **39** and then directed to the absorption tower **41** too. Inside the absorption tower **41,** the pressurised NOₓ gas stream **24** reacts with water to produce the tail gas **5** and a stream of raw nitric acid **27** also containing residual NOₓ gas, which is fed to a bleacher **62.** The residual NOₓ gas in the raw nitric acid stream **27** is then stripped out with a gaseous medium **72** such as an oxygen-containing gas or air, inside the bleacher unit **62** operating at low-pressure; the bleacher unit is generally operated at about the same pressure as the ammonia converter. The drive power for both the air compressor **36** and the NOₓ gas compressor **40** originates from a tail gas expander **7** and a steam turbine **51** or a power source such as an electric motor (not shown). The heat generated in the ammonia converter **37** is used for heating the tail gas **5** in the tail gas heat exchanger **43** comprising the heat exchangers **66** and **67,** the tail gas heater being therefore optionally present. The tail gas **5** exchanges heat with the NOₓ gas/steam mixture **15** in the heat exchange system **43** and is expanded in the tail gas expander **7.**

The air used for the oxidation of ammonia is commonly denoted as primary air; the air used as stripping medium in the bleacher unit is commonly denoted as secondary air.

According to the prior art, the revamping of the nitric acid production plants to increase its capacity is commonly based on increasing the amount of primary air to the reactor, which leads to a proportional increase of the amount of nitric acid produced.

The increase of the amount of primary air in the reactor entails the installation of a new air compressor or the revamping of the existing one. The increase of the primary air also causes a higher amount of gas to be processed subsequently into the NOₓ gas compressor. This entails the further revamping of the NOₓ gas compressor or the installation of a new one, and the modification or replacement of the tail gas and/or the steam-turbines and/or the electrical motor. Otherwise, the NOₓ gas compressor would easily achieve its process limit, thus becoming the bottleneck of the plant.

However, the revamping has significant drawbacks. First of all, it entails elevated costs for the modification or replacement of the existing equipment, i.e. the air compressor, the NOₓ gas compressor and the corresponding turbines and electrical motor. In addition, the revamping of the equipment is also technically demanding leading to long plant downtime.

Another problem related to nitric acid production plants is the high amount of energy required in order to operate the air compressor. Consequently, a high amount of energy is required to achieve the targeted nitric acid production throughput.

A goal of the present invention, therefore, is to provide a system and a method for operating the system which allows for the reduction or even suppression of power required to operate the air compressor in a dual nitric acid plant.

### Background Prior Art

In CN110540178A (China Chengda Engineering Co Ltd, 2019), process for producing nitric acid is disclosed. Nitric acid is produced by a medium pressure method, which is characterized in that it comprises the following steps: the ammonia oxidation and absorption pressure is 0.5-0.6 MPa; enabling the tail gas leaving the absorption tower to pass through a carbon molecular sieve Temperature Swing Adsorption (TSA) treatment device to reduce the content of nitrogen oxides in the tail gas to be less than 100mg/Nm³; the process air of the air compressor is used as the regeneration desorption gas of the carbon molecular sieve temperature swing adsorption treatment device, and the regeneration desorption gas containing the nitrogen oxide can be returned to the ammonia oxidation reactor for reuse; adding a layer of N₂O decomposition catalyst in the oxidation reactor to reduce the content of N₂O to 50-100 PPM through reaction; the nitric acid bleaching tower is arranged at the bottom of the absorption tower, and the two towers are integrated, so that the process flow is shortened, and the equipment investment is reduced. With regard to the amount of air being compressed by the air compressor, however, the same amount of air is to be compressed as would be in the absence of the TSA unit: in the presence of the TSA unit, the amount of air being compressed is initially split between the TSA unit and the ammonia oxidation reactor directly and, in the end, with the amount of compressed air leaving the TSA unit being directed also to the ammonia oxidation reactor, the total amount of air compressed by the air compressor ends up in the ammonia oxidation reactor.

In WO2018/162150A1 (Casale SA, 13 September 2018) a solution is proposed to overcome the revamping drawbacks. WO2018162150A1 discloses a dual pressure plant for the production of nitric acid comprising a reactor providing a gaseous effluent containing nitrogen oxides, an absorber unit in which nitrogen oxides react with water providing raw nitric acid and, the absorber unit operating at a pressure greater than the pressure of the reactor, a compressor elevating the pressure of the reactor effluent to the absorber unit pressure, the plant also comprising a first HP bleacher unit and a second LP bleacher unit, the first HP bleacher unit stripping with air the NOₓ gas from the output stream of the absorber unit, thus providing a partially stripped nitric acid stream and a nitrogen oxides-loaded air stream, the former being fed to the second LP-bleacher unit and the latter being recycled to the oxidation section, upstream of the NOₓ gas compressor.

A further air compressor is also provided, which supplies the first HP bleacher unit with air. Hence, energy is required in order to operate a first HP bleacher unit at a high-pressure and then recycle NOₓ gases to the delivery side of the NOₓ gas compressor.

Therefore, there remains a need for a process and a corresponding plant setup for minimizing or even suppressing the amount of energy required in order to operate the NOₓ gas compressor and, preferably, also the air compressor, in order to avoid bottlenecks in the nitric acid production throughput associated with those compressors.

### Summary

In one aspect of the disclosure, a production plant for producing nitric acid at reduced power consumption and reduced emissions, comprising a source of pressurised air in fluid communication with a system, is disclosed. The system comprises:
- a source of an oxygen-rich gas;
- a mixing apparatus downstream the oxygen-rich gas, for mixing an oxygen-containing gas with an ammonia gas stream, to produce an ammonia/oxygen-containing gas mixture;
- means for measuring the oxygen concentration in the oxygen-containing gas;
- means for adjusting the concentration of oxygen in the oxygen-containing gas such that the oxygen to ammonia molar ratio at the inlet of the ammonia converter is at least 1.25;
- means for adjusting the supply of the ammonia gas stream to the mixing apparatus;
- an ammonia converter operable at a pressure P1, for oxidising ammonia in the ammonia/oxygen-containing gas mixture, to produce a NOₓ gas/steam mixture, comprising water and nitric oxide;
- means for measuring the temperature in the ammonia converter;
- a gas cooler/condenser downstream the ammonia converter, to produce an aqueous diluted nitric acid mixture and a gaseous NOₓ stream;
- a NOₓ gas compressor for compressing the gaseous NOₓ stream, to produce a compressed NOₓ gas stream at a pressure P2;
- an absorption tower for absorbing the NOₓ gases from the compressed NOₓ gas stream in water, to produce a stream of raw nitric acid-containing residual NOₓ gas and a tail gas comprising NOₓ gases, comprising an absorption tower tail gas outlet for evacuating the tail gas;
- means for measuring the concentration of oxygen in a tail gas stream downstream the absorption tower;
- a heat exchange system located upstream the gas cooler/condenser for exchanging heat between the NOₓ gas/steam mixture and the tail gas;
- an additional gas cooler/condenser for separating and condensing steam from the compressed NOₓ gas stream, to produce a compressed NOₓ gas stream having a temperature ranging from 20 to 60 °C;
- a supply of an oxygen-rich gas having either:
   - a pressure equal to or higher than P1 and up to P2, for supplying oxygen upstream the NOₓ gas compressor; or
   - a pressure higher than P2, for supplying oxygen to the compressed NOₓ gas stream,
such that the tail gas contains at least 0.5% by volume oxygen; and
- a tail gas expander located downstream the heat exchange system, for expanding a stream of tail gas downstream the absorption tower, to produce a first expanded tail gas at a pressure P1, wherein the tail gas expander can at least partly power the NOₓ gas compressor;

The production plant is characterised in that the system further comprises:
- means for splitting a stream of tail gas downstream the absorption tower into a first tail gas stream in fluid communication with the oxygen-rich gas and a second tail gas stream; and
- means for adjusting the amount of tail gas being splitted into the first tail gas stream and the second tail gas stream.

The inventors have found that, instead of continuously supplying compressed air provided by an air compressor to the mixing unit, it is possible to recirculate the first tail gas stream at a pressure P1. Therefore, compressed air only has to be supplied in order to start the process but no longer after the production of the tail gas has started and an air compressor is not required. The tail gas has a pressure higher than P1 and, therefore, the tail gas expander can be used to expand a stream of tail gas to a pressure P1. In addition, the oxygen-rich gas and the supply of an oxygen-rich gas having a pressure equal to or higher than P1 and up to P2 or a pressure higher than P2, respectively provide oxygen to the ammonia converter and to the absorption tower, such that, in the absence of the primary and secondary air provided by the air compressor, the amount of oxygen in the ammonia converter and in the absorption tower is similar to that in a standard dual pressure nitric acid plant.

In the absence of an air compressor and with the first tail gas stream being recirculated in the system, not only is the power demand of the system reduced: the NOₓ emissions leaving the system are also reduced. Therefore, the size of the treatment unit for treating those NOₓ emissions is reduced with respect to the size in the corresponding standard dual pressure nitric acid plant.

In one embodiment according to the production plant of the disclosure, the system further comprises:
- a steam turbine, wherein the steam turbine can at least partly power the NOₓ gas compressor;
- a heat exchanger, such that that the expanded tail gas exchanges heat with the tail gas in the heat exchanger and exits the heat exchanger at a temperature below 300 °C, wherein the expanded tail gas having exchanged heat with the tail gas is the stream of tail gas splitted by the means for splitting;
- a De-NOₓ treatment unit located in a tail gas stream downstream the absorption tower; and
- pressure release means for expanding the second tail gas stream to atmospheric pressure, to produce a second expanded tail gas.

In one embodiment according to the production plant of the disclosure, the system further comprises a bleacher for bleaching the stream of raw nitric acid-containing residual NOₓ gas, to provide a stream of bleached nitric acid, having an inlet in fluid communication with a high-pressure water electrolyser supplying an oxygen-rich bleaching gas, and an outlet for off-gases in fluid communication with any stream downstream the ammonia converter and upstream the NOₓ gas compressor if the bleacher operates at a pressure higher than P1 and up to equal to P2, or in fluid communication with any stream downstream the NOₓ gas compressor if the bleacher operates at a pressure higher than P2, such that the supply for an oxygen-rich gas comes at least partly from the off-gases.

In one embodiment according to the production plant of the disclosure, part of the oxygen-rich gas or part of the oxygen-containing gas or part of the tail gas, is in fluid communication with the inlet of the bleacher, such that the oxygen rich-bleaching gas is made at least partly of the oxygen-rich gas or part of the oxygen-containing gas or part of the tail gas.

In one embodiment according to the production plant of the disclosure, the system further comprises a stream of an oxygen-rich gas in direct fluid communication with any stream of tail gas downstream the absorption tower.

In one embodiment according to the production plant of the disclosure, the oxygen-rich gas, the supply for an oxygen-rich gas, the stream of an oxygen-rich gas in direct fluid communication with any stream of tail gas downstream the absorption tower and the oxygen-rich bleaching gas are all provided by a water electrolyser.

In one embodiment according to the production plant of the disclosure, the fluid communication between the source of pressurised air and the system is in the tail gas stream in direct fluid communication with the oxygen-rich gas having a pressure P1.

In one aspect of the disclosure, a method for producing nitric acid at reduced power consumption and reduced emissions, in a production plant according to the production plant of the disclosure, is disclosed. The method comprises the steps of:
a) supplying the pressurised air in the system;
b) operating the NOₓ gas compressor or the tail gas expander using external power, thereby inducing a pressurised air flow in the system and a pressure P2 downstream the NOₓ gas compressor;
c) supplying the ammonia gas stream to the mixing apparatus, thereby producing the ammonia/oxygen-containing gas mixture;
d) oxidising ammonia in the ammonia/oxygen-containing gas mixture in the ammonia converter at a pressure P1 and at a temperature ranging from 800 to 950 °C, thereby producing the gaseous NOₓ gas/steam mixture, comprising water and nitric oxide;
e) cooling the NOₓ gas in the gaseous NOₓ gas/steam mixture in the heat exchange system and in the gas/cooler condenser, thereby producing an aqueous diluted nitric acid mixture and a gaseous NOₓ stream;
f) compressing the gaseous NOₓ stream in the NOₓ gas compressor, thereby providing the NOₓ compressed gas stream having a pressure P2;
g) absorbing the compressed gaseous NOₓ stream in the absorption tower, thereby providing the stream of raw nitric acid-containing residual NOₓ gas and the tail gas comprising NOₓ gases;
h) heating the tail gas in the heat exchange system, with the heat from the NOₓ gas/steam mixture coming from the ammonia converter to a temperature ranging from 150 to 650 °C;
i) cooling the compressed NOₓ gas stream in the additional gas cooler/condenser, thereby providing a compressed NOₓ gas stream having a temperature ranging from 20 to 60 °C; and
j) expanding the tail gas obtained in step h) in the tail gas expander, thereby providing the expanded tail gas;

The method is characterised in that it further comprises the steps of:
k) mixing the first tail gas stream with the oxygen-rich gas, thereby providing the oxygen-containing gas;
I) measuring the oxygen concentration in the oxygen-containing gas;
m) if the oxygen concentration measured in step I) is such that the oxygen to ammonia molar ratio in the ammonia converter is less than 1.25, adjusting the oxygen-rich gas having a pressure P2 and being mixed in step k), such that the oxygen to ammonia molar ratio at the inlet of the ammonia converter is at least 1.25;
n) measuring the temperature in the ammonia converter;
o) adjusting the gas volume being mixed in step k) or the ammonia gas stream supplied in step d), if the temperature measured in step n) is outside the range of 800-950 °C, such that the temperature in the ammonia converter is maintained in the range of 800-950 °C;
p) measuring the oxygen concentration in the tail gas downstream the absorption tower;
q) if the oxygen concentration measured in step p) is less 0.5% by volume oxygen, supplying the supply of the oxygen-rich gas at a pressure equal to or higher than P1 and up to P2 upstream the NOₓ gas compressor, or at a pressure higher than P2 downstream the NOₓ gas compressor;
r) supplying the oxygen-containing gas to the mixing unit; and
s) repeating steps c) to r).

In one embodiment according to the method of the disclosure, the first tail gas stream mixed in step k) is obtained after step j), and the method further comprises the steps of:
t) before step k), heating up, in the heat exchanger, the tail gas obtained in step g) with the tail gas obtained in step j), thereby bringing the tail gas to be mixed in step k) to a temperature below 300 °C;
u) treating the tail gas obtained in in the De-NOₓ treatment unit before step h) and after step t); and
v) expanding the second tail gas stream in the pressure release means, thereby providing the additional expanded tail gas;
w) recovering at least part of the steam generated in the ammonia converter in the steam turbine.

In one embodiment according to the method of the disclosure, the method further comprises the step of:
x) bleaching the stream of raw nitric acid-containing residual NOₓ gas in the bleacher, thereby producing the stream of bleached nitric acid.

In one embodiment according to the method of the disclosure, the method further comprises the step of:
y) supplying part of the oxygen-rich or part of the oxygen-containing gas obtained in step k) or part of the tail gas obtained in step g), to the bleacher in step x).

In one embodiment according to the method of the disclosure, the method further comprises the step of:
z) adding the stream of an oxygen-rich gas in direct fluid communication with any stream of tail gas downstream the absorption tower, downstream the absorption tower.

In one embodiment according to the method of the disclosure, the method further comprises the steps of:
z') operating the water electrolyser, thereby producing oxygen-gas; and
z") providing, from the oxygen produced by the water electrolyser in step z', at least the oxygen-rich gas, the supply for an oxygen-rich gas, the stream of an oxygen-rich gas in direct fluid communication with any stream of tail gas downstream the absorption tower and the oxygen-rich bleaching gas.

In one embodiment according to the method of the disclosure, in step a), the pressurised air having a pressure P1 is supplied to the tail gas stream in direct fluid communication with the oxygen-rich gas having a pressure P2.

In one aspect of the disclosure, the use of the production plant of the disclosure for performing the method of the disclosure, is disclosed.

In one aspect of the disclosure, a method for revamping a production plant for producing nitric acid, comprising:
- an air compressor for providing a compressed air stream;
- a mixing apparatus, for mixing the compressed air stream with an ammonia gas stream, to produce an ammonia/oxygen-containing gas mixture;
- means for adjusting the supply of the ammonia gas stream to the mixing apparatus;
- an ammonia converter operable at a pressure P1, for oxidising ammonia in the ammonia/oxygen-containing gas mixture, to produce a NOₓ gas/steam mixture, comprising water and nitric oxide; means for measuring the temperature in the ammonia converter;
- a gas cooler/condenser, downstream the ammonia converter, to produce an aqueous diluted nitric acid mixture and a gaseous NOₓ stream;
- a NOₓ gas compressor for compressing the gaseous NOₓ stream, to produce a compressed NOₓ gas stream at a pressure P2;
- an absorption tower for absorbing the NOₓ gases from the compressed NOₓ gas stream in water, to produce a stream of raw nitric acid-containing residual NOₓ gas and a tail gas comprising NOₓ gases, comprising an absorption tower tail gas outlet for evacuating the tail gas;
- means for measuring the concentration of oxygen in the tail gas in a tail gas stream downstream the absorption tower;
- a heat exchange system for exchanging heat between the NOₓ/gas steam mixture and the tail gas;
- an additional gas cooler/condenser for separating and condensing steam from the compressed NOₓ gas stream, to produce a compressed NOₓ gas stream having a temperature ranging from 20 to 60 °C;
- a source of an oxygen-rich gas having either:
   - a pressure equal to or higher than P1 and up to P2, for supplying oxygen upstream the NOₓ gas compressor; or
   - a pressure higher than P2, for supplying oxygen to the compressed NOₓ gas stream,
such that the tail gas contains at least 0.5% by volume oxygen; and
- a tail gas expander located downstream the heat exchange system, for expanding a stream of tail gas downstream the absorption tower, to produce a first expanded tail gas at a pressure P1, wherein the tail gas expander can at least partly power the NOₓ gas compressor into a production plant according to the production plant of the disclosure, is disclosed. The method comprises the steps of:
- introducing a source of pressurised air in fluid communication with the system;
- introducing a source of an oxygen-rich gas upstream the mixing apparatus;
- introducing means for measuring the oxygen concentration in the oxygen-containing gas;
- introducing means for adjusting the concentration of oxygen in the oxygen-containing gas such that the oxygen to ammonia molar ratio at the inlet of the ammonia converter is at least 1.25;
- introducing means for splitting a stream of tail gas downstream the absorption tower into a first tail gas stream in fluid communication with the oxygen-rich gas and a second tail gas stream;
- introducing means for adjusting the amount of tail gas being splitted into the first tail gas stream and the second tail gas stream ; and
- removing the air compressor.

### List of Figures

**Figure 1****:** Nitric acid plant according to the prior art
**Figure 2A****:** Nitric acid plant according to the disclosure with a low-pressure bleacher
**Figure 2B****:** Nitric acid plant according to the disclosure with a high-pressure bleacher

### Table of numerals

| | |
|---|---|
| **4** | air |
| **5** | tail gas |
| **6** | outlet of nitric acid absorption tower |
| **7** | tail gas expander |
| **10** | first tail gas stream |
| **14** | ammonia/oxygen-containing gas mixture |
| **15** | low-pressure NOₓ gas/steam mixture |
| **17** | aqueous diluted nitric acid mixture |
| **22** | gaseous NOₓ stream |
| **24** | compressed NOₓ gas |
| **27** | stream of raw nitric acid-containing residual NOₓ gas |
| **32** | ammonia |
| **34** | compressed air stream having a pressure P1 |
| **35** | mixing apparatus |
| **36** | air compressor |
| **37** | ammonia converter operable at a pressure equal to or lower than P1 |
| **38** | gas cooler/condenser |
| **39** | additional gas cooler/condenser |
| **40** | NOₓ gas compressor having a pressure P2 |
| **41** | absorption tower operable at a pressure P2 |
| **43** | heat exchange system |
| **50** | oxygen-rich gas having a pressure P1 |
| **51** | steam turbine |
| **55** | means for splitting the tail gas |
| **56** | oxygen-containing gas |
| **60** | pressure release means |
| **61** | pressurised oxygen-rich gas |
| **62** | bleacher |
| **63** | high-pressure water electrolyser |
| **64** | expanded tail gas |
| **65** | pressurised air having a pressure P1 |
| **66** | first heat exchanger of the heat exchange system **43** |
| **67** | second heat exchanger of the heat exchange system **43** |
| **68** | oxygen-rich gas having a pressure equal to or higher than P1 and up to P2, or a pressure higher than P2 |
| **69** | additional expanded tail gas |
| **70** | De-NOₓ treatment unit |
| **72** | oxygen-rich bleaching gas |
| **73** | outlet of the bleacher |
| **74** | stream of an oxygen-rich gas in direct fluid communication with a tail gas stream |
| **75** | bleached nitric acid |
| **77** | off gases from the outlet **73** of the bleacher **62** |
| **78** | means for pressurising |
| **79** | heat exchanger |
| **80** | second tail gas stream |

### Detailed description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Where the term "about" when applied to a particular value or to a range, the value or range is interpreted as being as accurate as the method used to measure it.

As defined herein, a pressurised oxygen-rich gas is a gas having a pressure ranging from 9 to 30 bara, preferably 15 to 30 bara, and comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen.

As defined herein, an oxygen-rich gas is a gas comprising more than 21 vol% of oxygen, more in particular more than 30 vol%, more than 40 vol%, more than 50 vol%, more than 60 vol%, more than 70 vol%, more than 80 vol%, more than 90 vol%, more than 95 vol%, and more than 99 vol%, more in particular 100 vol% of oxygen. Such oxygen-rich gas can, for example, be provided by an air separation unit or a water electrolyser.

As defined herein, air is ambient air having atmospheric pressure.

### Nitric Acid Production Plant

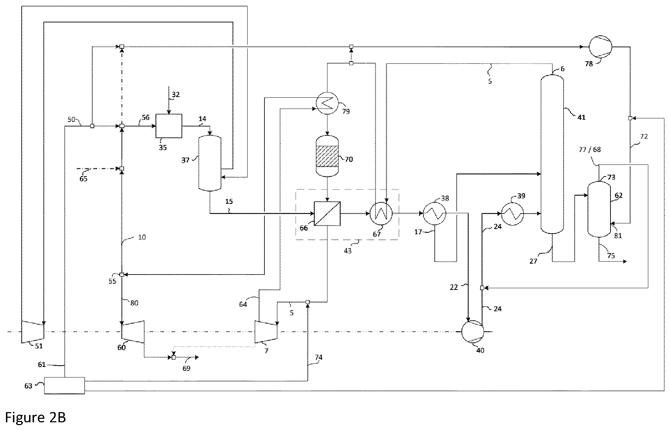

Reference is made to Figures 2A and 2B. In one aspect of the disclosure, a production plant for producing nitric acid at reduced power consumption and reduced emissions, comprising a source of pressurised air **65** in fluid communication with a system, is disclosed. The system comprises a source of an oxygen-rich gas **50;** a mixing apparatus **35** downstream the oxygen-rich gas **50,** for mixing an oxygen-containing gas **56** with an ammonia gas stream **32,** to produce an ammonia/oxygen-containing gas mixture **14;** means for measuring the oxygen concentration in the oxygen-containing gas **56;** means for adjusting the supply of the ammonia gas stream **32** to the mixing apparatus **35;** an ammonia converter **37** operable at a pressure P1, for oxidising ammonia in the ammonia/oxygen-containing gas mixture **14,** to produce a NOₓ gas/steam mixture **15,** comprising water and nitric oxide; means for adjusting the concentration of oxygen in the oxygen-containing gas **56** such that the oxygen to ammonia molar ratio at the inlet of the ammonia converter **37** is at least 1.25; means for measuring the temperature in the ammonia converter **37;** a gas cooler/condenser **38** downstream the ammonia converter **37,** to produce an aqueous diluted nitric acid mixture **17** and a gaseous NOₓ stream **22;** a NOₓ gas compressor **40** for compressing the gaseous NOₓ stream **22,** to produce a compressed NOₓ gas stream **24** at a pressure P2; an absorption tower **41** for absorbing the NOₓ gases from the compressed NOₓ gas stream **24** in water, to produce a stream of raw nitric acid-containing residual NOₓ gas **27** and a tail gas **5** comprising NOₓ gases, comprising an absorption tower tail gas outlet **6** for evacuating the tail gas **5;** means for measuring the concentration of oxygen in a tail gas stream downstream the absorption tower **41;** a heat exchange system **43** located upstream the gas cooler/condenser **38** for exchanging heat between the NOₓ gas/steam mixture **15** and the tail gas **5;** an additional gas cooler/condenser **39** for separating and condensing steam from the compressed NOₓ gas stream **24,** to produce a compressed NOₓ gas stream **24** having a temperature ranging from 20 to 60 °C; a supply of an oxygen-rich gas **68** having either a pressure equal to or higher than P1 and up to P2, for supplying oxygen upstream the NOₓ gas compressor **40,** or a pressure higher than P2, for supplying oxygen to the compressed NOₓ gas stream **24,** such that the tail gas **5** contains at least 0.5% by volume oxygen; and a tail gas expander **7** located downstream the heat exchange system **43,** for expanding a stream of tail gas downstream the absorption tower **41,** to produce a first expanded tail gas **64** at a pressure P1, wherein the tail gas expander **7** can at least partly power the NOₓ gas compressor **40;**

The production plant is characterised in that the system further comprises means for splitting **55** a stream of tail gas downstream the absorption tower **41** into a first tail gas stream **10** in fluid communication with the oxygen-rich gas **50** and a second tail gas stream **80;** and means for adjusting the amount of tail gas being splitted into the first tail gas stream **10** and the second tail gas stream **80.**

Typically, P1 ranges from 2 to below 6 bara and P2 ranges from 6 to 16 bara. The person skilled in the art will determine the optimal percentages of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** he will establish weigh out the benefits of increasing the oxygen content in the absorption tower **41,** against the drawback of a higher gas volume downstream the absorption tower **41** implying equipment, such as heat exchangers, of a larger size, for heating tail gas.

Typically, the heat exchange system **43** comprises at least two heat exchangers **66, 67**. The person skilled in the art will realise that it is possible to split a stream of tail gas inside the heat exchange system, for example between the heat exchanger **66** and **67.** In particular, the system comprises further heat exchange systems, such that the gaseous NOₓ stream **22** or the NOₓ compressed gas stream **24** exchange heat with the tail gas **5.**

As defined herein, a stream of tail gas is any gas stream located between the absorption tower **41** and the communication between the first tail gas stream **10** and the oxygen-rich gas **50.**

As defined herein, means for measuring the concentration of oxygen in a gaseous stream are any means suitable for indicating the concentration of oxygen in the gaseous stream. In particular, the oxygen concentration can be determined, for example, from a process gas analyser.

As defined herein, means for adjusting the oxygen concentration are any suitable means for assessing the amount of oxygen to be introduced in the system from a measurement of the oxygen concentration. The oxygen concentration can be determined, for example, from a measurement in the gas phase using a process gas analyser. The oxygen concentration can also be determined from computing using the concentration of the oxygen source being introduced in the system, the flow at which the source is introduced in the system, and the relative flow values of the gases with which the source is mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In particular, the means is an integrated process control system, in which the concentration of oxygen is measured, and the relevant flow of oxygen is thereby determined, thus controlling the flow of oxygen, from a gaseous source of oxygen at a pre-determined concentration.

As defined herein, means for measuring the temperature are any means suitable for measuring and indicating the temperature in the ammonia oxidation burner. In particular, the means for measuring the temperature is a thermocouple or a thermometer suitable for measuring and indicating a temperature ranging as high as 1000 °C. More in particular, the means for measuring the temperature is an infrared thermometer for measuring and indicating a temperature ranging as high as 1000 °C.

As defined herein, means for converting steam into power are any means for achieving power from steam. In particular those means are a steam turbine connected to an electric generator.

As defined herein, means for splitting are any means suitable for splitting a stream of the tail gas such as to generate, in addition to the first tail gas stream **10,** a second tail gas stream **80.** In particular, the means for splitting is a T-connection having one inlet and two outlets, such that a gas flowing through the inlet of the T-connection is splitted into two gas streams of identical chemical composition.

As defined herein, means for adjusting the amount of tail gas being splitted into the first tail gas stream **10** and the additional tail gas stream **80,** are any means for controlling the splitting in the means for splitting **55.** In particular, the means for splitting **55** is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control means in the means for splitting **55,** thereby controlling the splitting the tail gas stream, in order for the measured temperature to be maintained in the range 800-950 °C.

The inventors have found that, instead of continuously supplying compressed air **34** provided by an air compressor **36** to the mixing unit **35,** it is possible to recirculate the first tail gas stream **10** at a pressure P1. Therefore, compressed air **34** only has to be supplied in order to start the process but no longer after the production of the tail gas **5** has started and an air compressor **36** is not required. The tail gas **5** has a pressure higher than P1 and, therefore, the tail gas expander **7** can be used to provide a stream of tail gas to a pressure P1. In addition, the oxygen-rich gas **50** and the supply of an oxygen-rich gas **68** having either a pressure equal to or higher than P1 and up to P2, respectively provide oxygen to the ammonia converter **37** and to the absorption tower **41,** such that, in the absence of the primary and secondary air provided by the air compressor **36,** the amount of oxygen in the ammonia converter **37** and in the absorption tower **41** is similar to that in a standard dual pressure nitric acid plant.

In the absence of an air compressor **36** and with the additional tail gas stream **10** being recirculated in the system, not only is the power demand of the system reduced: the NOₓ emissions leaving the system are also reduced. Therefore, the size of the treatment unit for treating those NOₓ emissions is reduced with respect to the size in the corresponding standard dual pressure nitric acid plant.

The person skilled in the art will realise that it is possible to have the means for splitting **55** integrated in the tail gas expander **7,** provided the tail gas expander **7** comprises at least two outlets, that is one outlet for the first tail gas stream **10** and another outlet for the second tail gas stream **80.**

In one embodiment according to the production plant of the disclosure, the system further comprises a steam turbine **51,** wherein the steam turbine can at least partly power the NOₓ gas compressor **40;** a heat exchanger **79,** such that that the expanded tail gas **64** exchanges heat with the tail gas **5** in the heat exchanger **79** and exits the heat exchanger **79** at a temperature below 300 °C, wherein the expanded tail gas **64** having exchanged heat with the tail gas **(5)** is the stream of tail gas splitted by the means for splitting **55;** a De-NOₓ treatment unit **70** located in a tail gas stream downstream the absorption tower **41;** and pressure release means **60** for expanding the second tail gas stream **80** to atmospheric pressure, to produce a second expanded tail gas **69.**

As defined herein, pressure release means are any means suitable for reducing the pressure of the first tail gas stream **80,** hence expanding the pressure of the first tail gas stream **80.** Such means are for example, a pressure release valve or a gas expander.

Advantageously, the means for splitting **55** are located downstream the heat exchange system **43.** Indeed, both the first tail gas stream **10** and the second tail gas stream **80** are then at an optimal temperature. This means that the first stream of tail gas **10** is at a temperature below 300 °C, such that the first tail gas stream **10** can be fed to the ammonia converter **37** without the amount of ammonia fed through the stream **32,** having to be adjusted in order to maintain the temperature ranging from 800 to 950 °C and at which the ammonia **37** is operable, in the ammonia converter **37.** In addition, the location of the means for splitting **55** at this location confers to the second tail gas stream **80** an optimal temperature for being expanded in the pressure release means **60** such as to provide an optimal of energy which can be used to power the means for pressurising **53.** Further, the presence of a steam turbine **51** allows for the recovery of the heat of the steam produced in the ammonia converter **37** and this recovered heat can be used, at least partly, for powering the tail NOₓ gas compressor **40.** Finally, the use of the steam turbine **51** contributes to operating the production plant in an energy-efficient manner.

In particular, the tail gas **5** is heated in the heat exchanger **79** from a temperature ranging from 20 to 250 °C, to a temperature ranging from 100 to 450 °C. Subsequently, the tail gas exiting the heat exchanger **79** is heated in the heat exchange system **43** to a temperature ranging from 200 to 550 °C. The tail gas exiting the heat exchanger **79** then is at an optimal temperature for being treated in the De-NOₓ treatment unit **70** and, therefore, the De-NOₓ treatment unit **70** is located between the heat exchanger **79** and the heat exchange system **43.** The person skilled in the art will, without any difficulty, select the proper location for the De-NOₓ treatment unit **70** such that the operating temperature of the De-NOₓ treatment unit **70** is in agreement with the temperature of the corresponding stream of tail gas.

In one embodiment according to the production plant of the disclosure, the system further comprises a bleacher **62** for bleaching the stream of raw nitric acid-containing residual NOₓ gas **27,** to provide a stream of bleached nitric acid **75,** having an inlet **81** in fluid communication with a high-pressure water electrolyser **63** supplying an oxygen-rich bleaching gas **72,** and an outlet **73** for off-gases **77** in fluid communication with any stream downstream the ammonia converter **37** and upstream the NOₓ gas compressor **40** if the bleacher **62** operates at a pressure higher than P1 and up to equal to P2 (Figure 2A), or in fluid communication with any stream downstream the NOₓ gas compressor **40** if the bleacher **62** operates at a pressure higher than P2 (Figure 2B), such that the supply for an oxygen-rich gas **68** comes at least partly from the off-gases **77.**

When the stream of raw nitric acid containing residual NOₓ gas **27** is bleached, the amounts of NOₓ gases and nitrous acid HNO₂ in the nitric acid solution are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching off-gases **77** is the oxygen-rich gas supplied by the supply **68** for an oxygen-rich gas having a pressure higher than P1 and up to P2 (Figure 2A) or higher than P2 (Figure 2B): the supply of the oxygen-rich gas having pressure higher than P1 and up to P2 (Figure 2A) or higher than P2 (Figure 2B) **68** is the bleacher **62** and no separate source of oxygen is required.

In one embodiment according to the production plant of the disclosure, part of the oxygen-rich gas **50** or part of the oxygen-containing gas **56** or part of the tail gas **5,** is in fluid communication with the inlet **81** of the bleacher **62,** such that the oxygen rich-bleaching gas **72** is made at least partly of the oxygen-rich gas **50** or part of the oxygen-containing gas **56** or part of the tail gas **5.**

If a bleacher **62** is present, as no secondary air is fed by an air compressor (**36** in the standard nitric acid plant) to the bleacher **62,** the bleacher **62** can be conveniently fed by the oxygen-rich gas **50.** Also, once tail gas **5** is produced and recirculated, the oxygen-containing gas **56** or the tail gas **5** can be fed to the bleacher **62:** the concentration of NOₓ gases in the oxygen-containing gas **56** or the tail gas **5** is sufficiently low that the bleaching in the bleacher **62** remains sufficiently efficient.

In particular, the system further comprises means for pressurising **78** the oxygen-rich gas **50** or the oxygen-containing gas **56** or the tail gas **5,** to a pressure higher than P2, such that the bleacher **62** is a high-pressure bleacher, that is a bleacher operating at a pressure ranging from above 6 bara and up to 16 bara (Figure 2B). Those means for pressurising **78** can, for example, be a gas compressor.

In one embodiment according to the production plant of the disclosure, the system further comprises a stream of an oxygen-rich gas **74** in fluid communication with any stream of tail gas downstream the absorption tower **41.**

The feeding of a stream of an oxygen-rich gas **74** allows to reduce the amount of the oxygen-rich gas **50** having to be provided to the mixing unit **35.** In particular, the stream of oxygen-rich gas **74** can be fed downstream the heat exchange **43** and upstream the tail gas expander **7,** which allows more power to be exported from the tail gas expander **7.**

In one embodiment according to the production plant of the disclosure, the oxygen-rich gas **50,** the supply for an oxygen-rich gas **68,** the stream of oxygen-rich gas **74** in fluid communication with any stream of tail gas downstream the absorption tower **41** and the oxygen-rich bleaching gas **72** are all provided by a water electrolyser **63.**

A water electrolyser is a device for the electrolysis of water, being the decomposition of water into oxygen and hydrogen gas, due to the passage of an electric current therethrough. This technique can be used to make hydrogen gas, a main component of hydrogen fuel, and oxygen gas. A suitable high-pressure water electrolyser may comprise an anode producing oxygen gas according to the reaction

2 OH- = H₂O + ½ O₂ + 2 e-;

a cathode, producing hydrogen gas according to the reaction

2 H₂O + 2 e- = H₂ + 2 OH- ;

an electrolyte consisting of an alkaline solution such as potassium hydroxide; and a porous diaphragm separating the anode and the cathode, in order to avoid the mixing of hydrogen gas and oxygen gas that together form an explosive mixture. Alternatively, the anode and the cathode may be separated by a solid polymer electrolyte such as the fluoropolymer Nafion, where the electrolyte provides the selective transport of protons from the anode to the cathode, as well as the electrical insulation between the anode and the cathode, and avoids the mixing of hydrogen gas and oxygen gas that together form an explosive mixture.

The anode and cathode can be made of nickel or steel, or mixtures thereof. Alternatively, for the purpose of enhancing the electrode reactions, the anode and cathode may contain catalysts that can be made of Iridium and Platinum, respectively. The diaphragm of an electrically insulating material is based on, for example, zirconia. The diaphragm has a porosity such that it forms a barrier against transport of hydrogen and oxygen gas bubbles, while containing a continuum of penetrated liquid electrolyte. An anode-diaphragm-cathode assembly constitutes an electrolysis cell. Electrolysis cells are piled in series in stacks that compose the core of an electrolyser. The hydrogen and oxygen production for a given stack volume is proportional to the current density and inversely proportional to the stacking distance. Regardless of stack volume, the hydrogen and oxygen production is proportional to the total current. In addition to the stack, the electrolyser comprises auxiliaries such as a current rectifier, a water demineralization unit, a water pump and a cooling system, a hydrogen purification unit, and instrumentation.

The electrolyser is operated by applying a voltage corresponding to the standard potential plus the overpotential over each cell. The total voltage depends on the total number of cells of which the electrolyser is comprised. OH- ions generated at the cathode migrate through the electrolyte in the diaphragm to the anode, where they are consumed by the anode reaction. Electrons travel the opposite direction in an external circuit. The electrolyser may be operated at a temperature of 50 to 80 °C, or 60 to 80 °C, and a gas pressure of 2 bara, preferably 9 to 30 bara, even more preferably 15 to 30 bara.

A high-pressure water electrolyser hence results in the production of pressurised hydrogen at the cathode and pressurised oxygen at the anode. What is required to perform high-pressure electrolysis is to pressurize the water used in the electrolysis process. As pressurising water requires less power than pressuring a gas, the use of a high-pressure water electrolyser results in the production of pressurised oxygen-rich gas at minimized power consumption.

Conveniently, the water electrolyser **63** provides oxygen to all the various points where oxygen needs to be fed. In this manner, the system is simplified and comprises a single source of oxygen from which oxygen-containing gas streams can be produced. The use of a high-pressure electrolyser operable at 9 to 30 bara is particularly useful as a source of oxygen gas to be supplied to a bleacher operating at a pressure higher than P2.

In one embodiment according to the production plant of the disclosure, the fluid communication between the source of pressurised air **65** and the system is in the tail gas stream in direct fluid communication with the oxygen-rich gas having a pressure P1 **50**.

It is preferred to introduce pressurised air **65** at the start-up in the tail gas stream in direct fluid communication with the oxygen-rich gas **50.** In this manner, upon operating the means for pressurising during the start-up of the system, it is ensured that air flows through the converter **37** when ammonia **32** is being fed to converter **37,** such that there is a sufficient amount of oxygen to convert ammonia into nitric oxide. Subsequently, the nitric acid process being induced, the tail gas **5** and the first tail gas stream **10** can be produced and recirculated to the mixing unit **35,** upon feeding the oxygen-rich gas **50.**

### Method For Producing Nitric Acid

In one aspect of the disclosure, a method for producing nitric acid at reduced power consumption and reduced emissions, in a production plant according to the production plant of the disclosure, is disclosed. The method comprises the steps of a) supplying the pressurised air **65** in the system; b) operating the NOₓ gas compressor **40** or the tail gas expander **7** using external power, thereby inducing a pressurised air flow in the system and a pressure P2 downstream the NOₓ gas compressor **40;** c) supplying the ammonia gas stream **32** to the mixing apparatus **35,** thereby producing the ammonia/oxygen-containing gas mixture **14;** d) oxidising ammonia in the ammonia/oxygen-containing gas mixture **14** in the ammonia converter **37** at a pressure P1 and at a temperature ranging from 800 to 950 °C, thereby producing the gaseous NOₓ gas/steam mixture **15,** comprising water and nitric oxide; e) cooling the NOₓ gas in the gaseous NOₓ gas/steam mixture **15** in the heat exchange system **43** and in the gas/cooler condenser **38,** thereby producing an aqueous diluted nitric acid mixture **17** and a gaseous NOₓ stream **22;** f) compressing the gaseous NOₓ stream **22** in the NOₓ gas compressor **40,** thereby providing the NOₓ compressed gas stream **24** having a pressure P2; g) absorbing the compressed gaseous NOₓ stream **24** in the absorption tower **41,** thereby providing the stream of raw nitric acid-containing residual NOₓ gas **27** and the tail gas **5** comprising NOₓ gases; h) heating the tail gas **5** in the heat exchange system **43,** with the heat from the NOₓ gas/steam mixture **15** coming from the ammonia converter **37** to a temperature ranging from 150 to 650 °C; i) cooling the compressed NOₓ gas stream **24** in the additional gas cooler/condenser **39,** thereby providing a compressed NOₓ gas stream **24** having a temperature ranging from 20 to 60 °C; and j) expanding the tail gas **5** obtained in step h) in the tail gas expander **7,** thereby providing the expanded tail gas **64.**

The method is characterised in that it further comprises the steps of k) mixing the first tail gas stream **10** with the oxygen-rich gas **50,** thereby providing the oxygen-containing gas **56; I)** measuring the oxygen concentration in the oxygen-containing gas **56;** m) if the oxygen concentration measured in step I) is such that the oxygen to ammonia molar ratio in the ammonia converter **37** is less than 1.25, adjusting the oxygen-rich gas having a pressure P2 **50** and being mixed in step k), such that the oxygen to ammonia molar ratio at the inlet of the ammonia converter **37** is at least 1.25; n) measuring the temperature in the ammonia converter **37;** o) adjusting the gas volume being mixed in step k) or the ammonia gas stream **32** supplied in step d), if the temperature measured in step n) is outside the range of 800-950 °C, such that the temperature in the ammonia converter is maintained in the range of 800-950 °C; p) measuring the oxygen concentration in the tail gas **5** downstream the absorption tower **41;** q) if the oxygen concentration measured in step p) is less 0.5% by volume oxygen, supplying the supply of the oxygen-rich gas **68** at a pressure equal to or higher than P1 and up to P2 upstream the NOₓ gas compressor **40,** or at a pressure higher than P2 downstream the NOₓ gas compressor **40;** r) supplying the oxygen-containing gas **56** to the mixing unit **35;** and s) repeating steps c) to r).

Typically, P1 ranges from 2 to below 6 bara and P2 ranges from 6 to 16 bara. The person skilled in the art will determine the optimal percentages of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** he will establish weigh out the benefits of increasing the oxygen content in the absorption tower **41,** against the drawback of a higher gas volume downstream the absorption tower **41** implying equipment, such as heat exchangers, of a larger size, for heating tail gas.

In particular, the gaseous NOₓ stream **22** or the NOₓ compressed gas stream **24** exchange heat with the tail gas **5.** In particular, the gaseous NOₓ stream **22** or the NOₓ compressed gas stream **24** exchange heat with the tail gas **5.**

The inventors have found that, instead of continuously supplying compressed air **34** provided by an air compressor **36** to the mixing unit **35,** it is possible to recirculate the first tail gas stream **10** at a pressure P1. Therefore, compressed air **34** only has to be supplied in order to start the process but no longer after the production of the tail gas **5** has started and an air compressor **36** is not required. The tail gas **5** has a pressure higher than P1 and, therefore, the tail gas expander **7** can be used to provide a stream of tail gas to a pressure P1. In addition, the oxygen-rich gas **50** and the supply of an oxygen-rich gas **68** having either a pressure equal to or higher than P1 and up to P2, respectively provide oxygen to the ammonia converter **37** and to the absorption tower **41,** such that, in the absence of the primary and secondary air provided by the air compressor **36,** the amount of oxygen in the ammonia converter **37** and in the absorption tower **41** is similar to that in a standard dual pressure nitric acid plant.

In the absence of an air compressor **36** and with the additional tail gas stream **10** being recirculated in the system, not only is the power demand of the system reduced: the NOₓ emissions leaving the system are also reduced. Therefore, the size of the treatment unit for treating those NOₓ emissions is reduced with respect to the size in the corresponding standard dual pressure nitric acid plant.

In one embodiment according to the method of the disclosure, the first tail gas stream **10** mixed in step k) is obtained after step j), and the method further comprises the steps of t) before step k), heating up, in the heat exchanger **79,** the tail gas **5** obtained in step g) with the tail gas obtained in step j), thereby bringing the tail gas to be mixed in step k) to a temperature below 300 °C; u) treating the tail gas **5** obtained in in the De-NOₓ treatment unit **70** before step h) and after step t); and v) expanding the second tail gas stream **80** in the pressure release means **(60),** thereby providing the additional expanded tail gas **69;** and w) recovering at least part of the steam generated in the ammonia converter **(37)** in the steam turbine **51.**

Advantageously, the means for splitting **55** are located downstream the heat exchange system **43.** Indeed, both the first tail gas stream **10** and the second tail gas stream **80** are then at an optimal temperature. This means that the first stream of tail gas **10** is at a temperature below 300 °C, such that the first tail gas stream **10** can be fed to the ammonia converter **37** without the amount of ammonia fed through the stream **32,** having to be adjusted in order to maintain the temperature ranging from 800 to 950 °C and at which the ammonia **37** is operable, in the ammonia converter **37.** In addition, the location of the means for splitting **55** at this location confers to the second tail gas stream **80** an optimal temperature for being expanded in the pressure release means **60** such as to provide an optimal of energy which can be used to power the means for pressurising **53.** Further, the presence of a steam turbine **51** allows for the recovery of the heat of the steam produced in the ammonia converter **37** and this recovered heat can be used, at least partly, for powering the tail NOₓ gas compressor **40.** Finally, the use of the steam turbine **51** contributes to operating the production plant in an energy-efficient manner.

In particular, the tail gas **5** is heated in the heat exchanger **79** from a temperature ranging from 20 to 250 °C, to a temperature ranging from 100 to 450 °C. Subsequently, the tail gas exiting the heat exchanger **79** is heated in the heat exchange system **43** to a temperature ranging from 200 to 550 °C. The tail gas exiting the heat exchanger **79** then is at an optimal temperature for being treated in the De-NOₓ treatment unit **70** and, therefore, the De-NOₓ treatment unit **70** is located between the heat exchanger **79** and the heat exchange system **43.** The person skilled in the art will, without any difficulty, select the proper location for the De-NOₓ treatment unit **70** such that the operating temperature of the De-NOₓ treatment unit **70** is in agreement with the temperature of the corresponding stream of tail gas.

In one embodiment according to the method of the disclosure, the method further comprises the step of x) bleaching the stream of raw nitric acid-containing residual NOₓ gas **27** in the bleacher **62,** thereby producing the stream of bleached nitric acid **75.**

When such bleaching step is performed, the amounts of NOₓ gases and nitrous acid HNO₂ in the raw nitric acid solution **27** are reduced. This in turn results in less brown fumes coming out of the nitric acid solution. In addition, the nitric acid solution provided by the bleacher is of a higher quality, that is purer.

Conveniently, when the stream of raw nitric acid containing residual NOₓ gas **27** is bleached, the bleaching off-gases **77** is the oxygen-rich gas supplied by the supply **68** for an oxygen-rich gas having a pressure higher than P1 and up to P2 (Figure 2A) or higher than P2 (Figure 2B): the supply of the oxygen-rich gas having pressure higher than P1 and up to P2 (Figure 2A) or higher than P2 (Figure 2B) **68** is the bleacher **62** and no separate source of oxygen is required.

In one embodiment according to the method of the disclosure, the method further comprises the step of y) supplying part of the oxygen-rich **50** or part of the oxygen-containing gas **56** obtained in step k) or part of the tail gas **5** obtained in step g), to the bleacher **62** in step x).

If a bleacher **62** is present, as no secondary air is fed by an air compressor (**36** in the standard nitric acid plant) to the bleacher **62,** the bleacher **62** can be conveniently fed by the oxygen-rich gas **50.** Also, once tail gas **5** is produced and recirculated, the oxygen-containing gas **56** or the tail gas **5** can be fed to the bleacher **62:** the concentration of NOₓ gases in the oxygen-containing gas **56** or the tail gas **5** is sufficiently low that the bleaching in the bleacher **62** remains sufficiently efficient.

In particular, the system further comprises the step of pressurising the oxygen-rich gas, the tail gas **5** or the oxygen-containing gas **56** in the means for pressurising **78,** to a pressure higher than P2, such that the bleacher **62** is a high-pressure bleacher, that is a bleacher operating at a pressure ranging from above 6 bara and up to 16 bara (Figure 2B). Those means for pressurising **78** can, for example, be a gas compressor.

In one embodiment according to the method of the disclosure, the method further comprises the step of z) adding the oxygen-rich gas **74** in fluid communication with any stream of tail gas downstream the absorption tower **41,** downstream the absorption tower **41.**

The feeding of a stream of an oxygen-rich gas **74** allows to reduce the amount of the oxygen-rich gas **50** having to be provided to the mixing unit **35.** In particular, the stream of oxygen-rich gas **74** can be fed downstream the heat exchange **43** and upstream the tail gas expander **7,** which allows more power to be exported from the tail gas expander **7.**

In one embodiment according to the method of the disclosure, the method further comprises the steps of z') operating the water electrolyser **63,** thereby producing oxygen-gas; and z") providing, from the oxygen produced by the water electrolyser **63** in step z", at least the oxygen-rich gas **50,** the supply for an oxygen-rich gas **68,** the oxygen-rich gas **74** in fluid communication with any stream of tail gas downstream the absorption tower **41** and the oxygen-rich bleaching gas **72.**

Conveniently, the water electrolyser **63** provides oxygen to all the various points where oxygen needs to be fed. In this manner, the system is simplified and comprises a single source of oxygen from which oxygen-containing gas streams can be produced. Operating a high-pressure electrolyser at 9 to 30 bara is particularly useful for producing a source of oxygen gas that can be supplied to a bleacher operating at a pressure higher than P2.

In one embodiment according to the method of the disclosure, in step a), the pressurised air having a pressure P1 **65** is supplied to the tail gas stream in direct fluid communication with the oxygen-rich gas having a pressure P2 **50.**

It is preferred to introduce pressurised air **65** at the start-up in the tail gas stream in direct fluid communication with the oxygen-rich gas **50.** In this manner, upon operating the means for pressurising during the start-up of the system, it is ensured that air flows through the converter **37** when ammonia **32** is being fed to converter **37,** such that there is a sufficient amount of oxygen to convert ammonia into nitric oxide. Subsequently, the nitric acid process being induced, the tail gas **5** and the first tail gas stream **10** can be produced and recirculated to the mixing unit **35,** upon feeding the oxygen-rich gas **50.**

### Use Of the Production Plant Of The Disclosure

In one aspect of the disclosure, the use of the production plant of the disclosure for performing the method of the disclosure, is disclosed.

### Method For Revamping A Nitric Acid Production Plant

In one aspect of the disclosure, a method for revamping a production plant for producing nitric acid, comprising an air compressor **36** for providing a compressed air stream **34;** a mixing apparatus **35,** for mixing the compressed air stream **34** with an ammonia gas stream **32,** to produce an ammonia/oxygen-containing gas mixture **14;** means for adjusting the supply of the ammonia gas stream **32** to the mixing apparatus **35;** an ammonia converter **37** operable at a pressure P1, for oxidising ammonia in the ammonia/oxygen-containing gas mixture **14,** to produce a NOₓ gas/steam mixture **15,** comprising water and nitric oxide; means for measuring the temperature in the ammonia converter **37;** a gas cooler/condenser **38,** downstream the ammonia converter **37,** to produce an aqueous diluted nitric acid mixture **17** and a gaseous NOₓ stream **22;** a NOₓ gas compressor **40** for compressing the gaseous NOₓ stream **22,** to produce a compressed NOₓ gas stream **24** at a pressure P2; an absorption tower **41** for absorbing the NOₓ gases from the compressed NOₓ gas stream **24** in water, to produce a stream of raw nitric acid-containing residual NOₓ gas **27** and a tail gas **5** comprising NOₓ gases, comprising an absorption tower tail gas outlet **6** for evacuating the tail gas **5;** means for measuring the concentration of oxygen in the tail gas **5** in a tail gas stream downstream the absorption tower **41;** a heat exchange system **43** for exchanging heat between the NOₓ/gas steam mixture **15** and the tail gas **5;** an additional gas cooler/condenser **39** for separating and condensing steam from the compressed NOₓ gas stream **24,** to produce a compressed NOₓ gas stream **24** having a temperature ranging from 20 to 60 °C; a supply of an oxygen-rich gas **68** having either a pressure equal to or higher than P1 and up to P2, for supplying oxygen upstream the NOₓ gas compressor **40,** or a pressure higher than P2, for supplying oxygen to the compressed NOₓ gas stream **24,** such that the tail gas **5** contains at least 0.5% by volume oxygen; and a tail gas expander **7** located downstream the heat exchange system **43,** for expanding a stream of tail gas downstream the absorption tower **41,** to produce a first expanded tail gas **64** at a pressure P1, wherein the tail gas expander **7** can at least partly power the NOₓ gas compressor **40** into a production plant according to the production plant of the disclosure, is disclosed. The method comprises the steps of introducing a source of pressurised air **65** in fluid communication with the system; introducing a source of an oxygen-rich gas **50** upstream the mixing apparatus **35;** introducing means for measuring the oxygen concentration in the oxygen-containing gas **56;** introducing means for adjusting the concentration of oxygen in the oxygen-containing gas **56** such that the oxygen to ammonia molar ratio at the inlet of the ammonia converter **37** is at least 1.25; introducing means for splitting **55** a stream of tail gas downstream the absorption tower **41** into a first tail gas stream **10** in fluid communication with the oxygen-rich gas **50** and a second tail gas stream **80;** introducing means for adjusting the amount of tail gas being splitted into the first tail gas stream **10** and the second tail gas stream **80;** and removing the air compressor **36.**

Typically, P1 ranges from 2 to below 6 bara and P2 ranges from 6 to 16 bara. The person skilled in the art will determine the optimal percentages of oxygen in the gases entering the ammonia converter **37** and the absorption tower **41,** in order for the catalytic conversion of ammonia to nitric oxide to proceed optimally in the ammonia converter **37** and for the absorption of NOₓ gases in the absorption tower **41** to proceed optimally. Further, upon determining the oxygen content exiting the absorption tower **41,** he will establish weigh out the benefits of increasing the oxygen content in the absorption tower **41,** against the drawback of a higher gas volume downstream the absorption tower **41** implying equipment, such as heat exchangers, of a larger size, for heating tail gas.

Typically, the heat exchange system **43** comprises at least two heat exchangers **66, 67.** The person skilled in the art will realise that it is possible to split a stream of tail gas inside the heat exchange system, for example between the heat exchanger **66** and **67.** In particular, the system both prior to and after revamping comprises further heat exchange systems, such that the gaseous NOₓ stream **22** or the NOₓ compressed gas stream **24** exchange heat with the tail gas **5.**

As defined herein, a stream of tail gas is any gas stream located between the absorption tower **41** and the communication between the first tail gas stream **10** and the oxygen-rich gas **50.**

As defined herein, means for measuring the concentration of oxygen in a gaseous stream are any means suitable for indicating the concentration of oxygen in the gaseous stream. In particular, the oxygen concentration can be determined, for example, from a process gas analyser.

As defined herein, means for adjusting the oxygen concentration are any suitable means for assessing the amount of oxygen to be introduced in the system from a measurement of the oxygen concentration. The oxygen concentration can be determined, for example, from a measurement in the gas phase using a process gas analyser. The oxygen concentration can also be determined from computing using the concentration of the oxygen source being introduced in the system, the flow at which the source is introduced in the system, and the relative flow values of the gases with which the source is mixed. Using the oxygen concentration, the relevant flow of oxygen to be introduced in the system is, in turn, determined and is used in controlling the flow of oxygen, from a gaseous source of oxygen at a pre-determined concentration. Controlling of the flow of gaseous oxygen can, for example, be achieved through flow control valves. In particular, the means is an integrated process control system, in which the concentration of oxygen is measured, and the relevant flow of oxygen is thereby determined, thus controlling the flow of oxygen, from a gaseous source of oxygen at a pre-determined concentration.

As defined herein, means for measuring the temperature are any means suitable for measuring and indicating the temperature in the ammonia oxidation burner. In particular, the means for measuring the temperature is a thermocouple or a thermometer suitable for measuring and indicating a temperature ranging as high as 1000 °C. More in particular, the means for measuring the temperature is an infrared thermometer for measuring and indicating a temperature ranging as high as 1000 °C.

As defined herein, means for converting steam into power are any means for achieving power from steam. In particular those means are a steam turbine connected to an electric generator.

As defined herein, means for splitting are any means suitable for splitting a stream of the tail gas such as to generate, in addition to the first tail gas stream **10,** a second tail gas stream **80.** In particular, the means for splitting is a T-connection having one inlet and two outlets, such that a gas flowing through the inlet of the T-connection is splitted into two gas streams of identical chemical composition.

As defined herein, means for adjusting the amount of tail gas being splitted into the first tail gas stream **10** and the additional tail gas stream **80,** are any means for controlling the splitting in the means for splitting **55.** In particular, the means for splitting **55** is a T-connection as described above and the means for adjusting is an orifice or a guide vane or a flow control valve at one or both of the outlets of the T-connection. Even more in particular, the means is an integrated process control system, in which the temperature in the ammonia converter **37** is determined through the means for measuring the temperature. The temperature in the ammonia converter **37** is then used for controlling a flow control means in the means for splitting **55,** thereby controlling the splitting the tail gas stream, in order for the measured temperature to be maintained in the range 800-950 °C.

### Examples

### 1. Recirculation of tail-gas at 99.3%

Reference is made to Figure 2A. Ammonia **32** was mixed with compressed air **65** in a mixing apparatus **35.** The resulting ammonia/compressed air mixture **14** was fed to an ammonia converter **37,** at a temperature ranging from 800 to 950 °C and operating at a pressure of 5.4 bara. The oxygen to ammonia mola ratio at the inlet of the ammonia converter **37** was at least 1.25. In the ammonia converter **37,** ammonia was oxidized over a mixed platinum/rhodium catalyst, thus obtaining a low-pressure NOₓ gas/steam mixture **15,** comprising water and nitric oxide (NO). The heat of the mixture coming out of the ammonia converter was recovered, thereby producing steam that was supplied to a steam turbine **51** and that was also exported to a grid and used for heating the tail gas **5** as will be described below. The NOₓ gas/stream mixture was subsequently cooled down in a gas cooler/condenser **38** to a temperature where the water condenses, and an aqueous diluted nitric acid mixture **17** was separated from a gaseous NOₓ stream **22.** The aqueous diluted acid mixture **17** was sent to the absorption tower **41.** The gaseous NOₓ stream **22** was further oxidized to further convert the NO to NO₂ and N₂O₄. The gaseous NOₓ stream **22** then was compressed in the NOx gas compressor **40** to a pressure of 12 bara, thereby producing the pressurised NOₓ gaseous stream **24.** The pressurised NOₓ gaseous stream **24** was cooled down in another gas cooler/condenser **39** and sent to the absorption tower **41** too. Inside the absorption tower **41,** the NOₓ gas reacted with water to produce the tail gas **5** and a stream of raw nitric acid also containing residual NOₓ gas, which was fed to a bleacher **62.** The oxygen content in the tail gas **5** was maintained at 3% using the off-gases **77** from a bleacher **62** which were supplied downstream the ammonia converter **37** and upstream the NOₓ gas compressor **40.** The tail gas **5** was consecutively heated in a heat exchanger **79,** treated in a De-NOₓ unit **70,** and heated by the gaseous NOₓ stream **15** in the heat exchange system **43** to 500 °C, thereby producing a heated tail gas stream. The heated tail gas stream was expanded over a tail gas expander **7,** thereby producing an expanded tail gas **64** . The expanded tail gas **64** was used for heating the tail gas **5** in the heat exchanger **7** and was subsequently splitted, over a T-tube **55,** into a first tail gas stream **10** representing 99.3% of the expanded tail gas **64,** and a second tail gas stream **80.** The first tail gas **10** was then mixed with oxygen-rich gas **50** having a pressure of 7 bara, thereby providing an oxygen-containing gas **56** in the absence of further pressurised air **34** being supplied, such that additional tail gas **5** could be produced, in the absence of an air compressor, heated, expanded and splitted and recirculated to the ammonia converter **37,** together with an oxygen-rich gas **50.** The amount of the oxygen-rich gas **50** fed to the process was controlled in order to ensure that the oxygen to ammonia ratio at the inlet of the ammonia converter **37** was measured and, in case it was lower than 1.25, the amount of the oxygen-rich gas **50** was adjusted, such that the oxygen to ammonia molar ratio at the inlet of the ammonia converter **37** was at least 1.25. The temperature inside the ammonia converter **37** was measured and established to have remained in the range of 800 to 950 °C. The residual 0.7 % of second tail gas stream **80** was sent to an additional tail gas expander **60.** The residual NOₓ gas in the raw nitric acid stream **27** was then stripped out with a gaseous medium **72** such as an oxygen-containing gas or air, inside the bleacher unit **62,** operating at about the same pressure as the ammonia converter of 5.4 bara. The drive power for both the air compressor **36** and the NOₓ compressor **40** originated from the tail gas expander **7,** the additional tail gas expander **60** and the steam turbine **51.** The net power associated to the NOₓ gas compressor **40,** the tail gas expander **7** and the additional tail gas expander **60** was 8 kWh/t 100% HNO₃. This power was produced by the steam turbine **51** or was provided by an electrical motor. The specific steam export amounted to 1100 to 1300 kg / t nitric acid.

### 2. Comparative example: no recirculation of tail-gas

Reference is made to Figure 1. Ammonia **32** was mixed with compressed air **34** in a mixing apparatus **35.** The oxygen to ammonia ratio at the inlet of the ammonia converter **37** was at least 1.25. In the ammonia converter **37,** the ammonia in the mixture of ammonia **32** and compressed air **34** was oxidized, at a pressure of 5.4 bara, over a mixed platinum/rhodium catalyst, thus obtaining a low-pressure NOₓ gas/steam mixture **15,** comprising water and nitric oxide (NO). The heat of the mixture coming out of the ammonia converter was recovered for supplying the steam turbine **51** and was also exported to a grid and used for heating the tail gas **5** as will be described below. The NOₓ gas/stream mixture was subsequently cooled down in a gas cooler/condenser **38** to a temperature where the water condenses, and an aqueous diluted nitric acid mixture **17** was separated from a gaseous NOₓ stream **22.** Subsequently, the gaseous NOₓ stream **22** was consecutively further oxidized to further convert the NO to NO₂ and N₂O₄, cooled down again in another gas cooler/condenser **39,** and then directed to an absorption tower **41.** On the other end, the gaseous NOₓ stream **22** was compressed in the NOx gas compressor **40** to a pressure of 12 bara, thereby producing the pressurised NOₓ gaseous stream **24.** The pressurised NOₓ gaseous stream **24** was sent to the absorbtion tower **41** too. Inside the absorption tower **41,** the NOₓ gaseous stream **24** reacted with water to produce the tail gas **5** and a stream of raw nitric acid **27** also containing residual NOₓ gas, which was fed to a bleacher **62.** The heat from the gaseous NOₓ stream **15** was used for heating the tail gas **5** in the heat exchange system **43** to 450 °C. The entire tail gas stream **5** was sent to the tail gas expander **7.** The residual NOₓ gas in the raw nitric acid stream **27** was then stripped out with a gaseous medium **72** such as an oxygen-containing gas or air, inside the bleacher unit **62,** operating at 5.4 bara. The drive power for the air compressor **36** and the NOx compressor **40** originated from the tail gas expander **7** and the steam turbine **51.** This power was produced by the steam turbine **51.** The specific steam export amounted to 600 to 800 kg / t nitric acid.

## Claims

1. A production plant for producing nitric acid at reduced power consumption and reduced emissions, comprising a source of pressurised air **(65)** in fluid communication with a system comprising:
• a source of an oxygen-rich gas **(50);**
• a mixing apparatus **(35)** downstream the oxygen-rich gas **(50),** for mixing an oxygen-containing gas (**56**) with an ammonia gas stream **(32),** to produce an ammonia/oxygen-containing gas mixture **(14);**
• means for measuring the oxygen concentration in the oxygen-containing gas **(56);**
• means for adjusting the concentration of oxygen in the oxygen-containing gas **(56)** such that the oxygen to ammonia molar ratio at the inlet of the ammonia converter **(37)** is at least 1.25;
• means for adjusting the supply of the ammonia gas stream **(32)** to the mixing apparatus **(35);**
• an ammonia converter **(37)** operable at a pressure P1, for oxidising ammonia in the ammonia/oxygen-containing gas mixture **(14),** to produce a NOₓ gas/steam mixture **(15),** comprising water and nitric oxide;
• means for measuring the temperature in the ammonia converter **(37);**
• a gas cooler/condenser **(38)** downstream the ammonia converter **(37),** to produce an aqueous diluted nitric acid mixture **(17)** and a gaseous NOₓ stream **(22);**
• a NOₓ gas compressor **(40)** for compressing the gaseous NOₓ stream **(22),** to produce a compressed NOₓ gas stream **(24)** at a pressure P2;
• an absorption tower **(41)** for absorbing the NOₓ gases from the compressed NOₓ gas stream **(24)** in water, to produce a stream of raw nitric acid-containing residual NOₓ gas **(27)** and a tail gas **(5)** comprising NOₓ gases, comprising an absorption tower tail gas outlet **(6)** for evacuating the tail gas **(5);**
• means for measuring the concentration of oxygen in a tail gas stream downstream the absorption tower **(41);**
• a heat exchange system **(43)** located upstream the gas cooler/condenser **(38)** for exchanging heat between the NOₓ gas/steam mixture **(15)** and the tail gas **(5);**
• an additional gas cooler/condenser **(39)** for separating and condensing steam from the compressed NOₓ gas stream **(24),** to produce a compressed NOₓ gas stream **(24)** having a temperature ranging from 20 to 60 °C;
• a supply of an oxygen-rich gas **(68)** having either:
• a pressure equal to or higher than P1 and up to P2, for supplying oxygen upstream the NOₓ gas compressor **(40);** or
• a pressure higher than P2, for supplying oxygen to the compressed NOₓ gas stream **(24),**
such that the tail gas **(5)** contains at least 0.5% by volume oxygen; and
• a tail gas expander **(7)** located downstream the heat exchange system **(43),** for expanding a stream of tail gas downstream the absorption tower **(41),** to produce a first expanded tail gas **(64)** at a pressure P1, wherein the tail gas expander **(7)** can at least partly power the NOₓ gas compressor **(40);**
**characterised in that** the system further comprises:
• means for splitting **(55)** a stream of tail gas downstream the absorption tower **(41)** into a first tail gas stream **(10)** in fluid communication with the oxygen-rich gas **(50)** and a second tail gas stream **(80);** and
• means for adjusting the amount of tail gas being splitted into the first tail gas stream **(10)** and the second tail gas stream **(80).**

2. The production plant according to claim 1, wherein the system further comprises:
• a steam turbine **(51),** wherein the steam turbine can at least partly power the NOₓ gas compressor **(40);**
• a heat exchanger **(79),** such that that the expanded tail gas **(64)** exchanges heat with the tail gas **(5)** in the heat exchanger **(79)** and exits the heat exchanger **(79)** at a temperature below 300 °C, wherein the expanded tail gas **(64)** having exchanged heat with the tail gas **(5)** is the stream of tail gas splitted by the means for splitting **(55);**
• a De-NOₓ treatment unit **(70)** located in a tail gas stream downstream the absorption tower **(41);** and
• pressure release means **(60)** for expanding the second tail gas stream **(80)** to atmospheric pressure, to produce a second expanded tail gas **(69).**

3. The production plant according to any one of claims 1 to 2, further comprising a bleacher **(62)** for bleaching the stream of raw nitric acid-containing residual NOₓ gas **(27),** to provide a stream of bleached nitric acid **(75),** having an inlet **(81)** in fluid communication with a high-pressure water electrolyser **(63)** supplying an oxygen-rich bleaching gas **(72),** and an outlet **(73)** for off-gases **(77)** in fluid communication with any stream downstream the ammonia converter **(37)** and upstream the NOₓ gas compressor **(40)** if the bleacher **(62)** operates at a pressure higher than P1 and up to equal to P2, or in fluid communication with any stream downstream the NOₓ gas compressor **(40)** if the bleacher **(62)** operates at a pressure higher than P2, such that the supply for an oxygen-rich gas **(68)** comes at least partly from the off-gases **(77).**

4. The production plant according to claim 3, wherein part of the oxygen-rich gas **(50)** or part of the oxygen-containing gas **(56)** or part of the tail gas **(5),** is in fluid communication with the inlet **(81)** of the bleacher **(62),** such that the oxygen rich-bleaching gas **(72)** is made at least partly of the oxygen-rich gas **(50)** or part of the oxygen-containing gas **(56)** or part of the tail gas **(5).**

5. The production plant according to any one of claims 1 to 4, further comprising a stream of an oxygen-rich gas **(74)** in direct fluid communication with any stream of tail gas downstream the absorption tower **(41).**

6. The production plant according to any one of claims 1 to 5, wherein the oxygen-rich gas (50), the supply for an oxygen-rich gas **(68),** the stream of an oxygen-rich gas **(74)** in direct fluid communication with any stream of tail gas downstream the absorption tower **(41)** and the oxygen-rich bleaching gas **(72)** are all provided by a water electrolyser **(63).**

7. The production plant according to any one of claims 1 to 6, wherein the fluid communication between the source of pressurised air **(65)** and the system is in the tail gas stream in direct fluid communication with the oxygen-rich gas having a pressure P1 **(50).**

8. A method for producing nitric acid at reduced power consumption and reduced emissions, in a production plant according to any one of claims 1 to 7, comprising the steps of:
a) supplying the pressurised air **(65)** in the system;
b) operating the NOₓ gas compressor **(40)** or the tail gas expander **(7)** using external power, thereby inducing a pressurised air flow in the system and a pressure P2, downstream the NOₓ gas compressor **(40);**
c) supplying the ammonia gas stream **(32)** to the mixing apparatus **(35),** thereby producing the ammonia/oxygen-containing gas mixture **(14);**
d) oxidising ammonia in the ammonia/oxygen-containing gas mixture **(14)** in the ammonia converter **(37)** at a pressure P1 and at a temperature ranging from 800 to 950 °C, thereby producing the gaseous NOₓ gas/steam mixture **(15),** comprising water and nitric oxide;
e) cooling the NOₓ gas in the gaseous NOₓ gas/steam mixture **(15)** in the heat exchange system **(43)** and in the gas/cooler condenser **(38),** thereby producing an aqueous diluted nitric acid mixture **(17)** and a gaseous NOₓ stream **(22);**
f) compressing the gaseous NOₓ stream **(22)** in the NOₓ gas compressor **(40),** thereby providing the NOₓ compressed gas stream **(24)** having a pressure P2;
g) absorbing the compressed gaseous NOₓ stream **(24)** in the absorption tower **(41),** thereby providing the stream of raw nitric acid-containing residual NOₓ gas **(27)** and the tail gas **(5)** comprising NOₓ gases;
h) heating the tail gas **(5)** in the heat exchange system **(43),** with the heat from the NOₓ gas/steam mixture **(15)** coming from the ammonia converter **(37)** to a temperature ranging from 150 to 650 °C;
i) cooling the compressed NOₓ gas stream **(24)** in the additional gas cooler/condenser **(39),** thereby providing a compressed NOₓ gas stream **(24)** having a temperature ranging from 20 to 60 °C; and
j) expanding the tail gas **(5)** obtained in step h) in the tail gas expander **(7),** thereby providing the expanded tail gas **(64);**
**characterised in that** the method further comprises the steps of:
k) mixing the first tail gas stream **(10)** with the oxygen-rich gas **(50),** thereby providing the oxygen-containing gas **(56);**
I) measuring the oxygen concentration in the oxygen-containing gas **(56);**
m) if the oxygen concentration measured in step I) is such that the oxygen to ammonia molar ratio in the ammonia converter **(37)** is less than 1.25, adjusting the oxygen-rich gas having a pressure P2 **(50)** and being mixed in step k), such that the oxygen to ammonia molar ratio at the inlet of the ammonia converter **(37)** is at least 1.25;
n) measuring the temperature in the ammonia converter **(37);**
o) adjusting the gas volume being mixed in step k) or the ammonia gas stream **(32)** supplied in step d), if the temperature measured in step n) is outside the range of 800-950 °C, such that the temperature in the ammonia converter is maintained in the range of 800-950 °C;
p) measuring the oxygen concentration in the tail gas **(5)** downstream the absorption tower **(41);**
q) if the oxygen concentration measured in step p) is less 0.5% by volume oxygen, supplying the supply of the oxygen-rich gas **(68)** at a pressure equal to or higher than P1 and up to P2 upstream the NOₓ gas compressor **(40),** or at a pressure higher than P2 downstream the NOₓ gas compressor **(40);**
r) supplying the oxygen-containing gas **(56)** to the mixing unit **(35);** and
s) repeating steps c) to r).

9. The method according to claim 8, wherein, the first tail gas stream **(10)** mixed in step k) is obtained after step j), and wherein the method further comprises the steps of:
t) before step k), heating up, in the heat exchanger **(79),** the tail gas **(5)** obtained in step g) with the tail gas obtained in step j), thereby bringing the tail gas to be mixed in step k) to a temperature below 300 °C;
u) treating the tail gas **(5)** obtained in in the De-NOₓ treatment unit **(70)** before step h) and after step t); and
v) expanding the second tail gas stream **(80)** in the pressure release means **(60),** thereby providing the additional expanded tail gas **(69);** and
w) recovering at least part of the steam generated in the ammonia converter **(37)** in the steam turbine **(51).**

10. The method according to any one of claims 8 to 9, further comprising the step of:
x) bleaching the stream of raw nitric acid-containing residual NOₓ gas **(27)** in the bleacher **(62),** thereby producing the stream of bleached nitric acid **(75).**

11. The method according to claim 10, further comprising the step of:
y) supplying part of the oxygen-rich **(50)** or part of the oxygen-containing gas **(56)** obtained in step k) or part of the tail gas **(5)** obtained in step g), to the bleacher **(62)** in step x).

12. The method according to any one of claims 8 to 11, further comprising the step of:
z) adding the stream of an oxygen-rich gas **(74)** in direct fluid communication with any stream of tail gas downstream the absorption tower **(41),** downstream the absorption tower **(41).**

13. The method according to any one of claims 8 to 12, further comprising the steps of:
z') operating the water electrolyser **(63),** thereby producing oxygen-gas; and
z") providing, from the oxygen produced by the water electrolyser **(63)** in step z), at least the oxygen-rich gas **(50),** the supply for an oxygen-rich gas **(68),** the stream of an oxygen-rich gas **(74)** in direct fluid communication with any stream of tail gas downstream the absorption tower **(41)** and the oxygen-rich bleaching gas **(72).**

14. The method according to any of claims 8 to 13, wherein, in step a), the pressurised air having a pressure P1 **(65)** is supplied to the tail gas stream in direct fluid communication with the oxygen-rich gas having a pressure P2 **(50).**

15. The use of the production plant according to any one of claims 1 to 7 for performing the method according to any one of claims 8 to 14.

16. A method for revamping a production plant for producing nitric acid, comprising:
• an air compressor **(36)** for providing a compressed air stream **(34);**
• a mixing apparatus **(35),** for mixing the compressed air stream **(34)** with an ammonia gas stream **(32),** to produce an ammonia/oxygen-containing gas mixture **(14);**
• means for adjusting the supply of the ammonia gas stream **(32)** to the mixing apparatus **(35);**
• an ammonia converter **(37)** operable at a pressure P1, for oxidising ammonia in the ammonia/oxygen-containing gas mixture **(14),** to produce a NOₓ gas/steam mixture **(15),** comprising water and nitric oxide; means for measuring the temperature in the ammonia converter **(37);**
• a gas cooler/condenser **(38),** downstream the ammonia converter **(37),** to produce an aqueous diluted nitric acid mixture (17) and a gaseous NOₓ stream **(22);**
• a NOₓ gas compressor **(40)** for compressing the gaseous NOₓ stream **(22),** to produce a compressed NOₓ gas stream **(24)** at a pressure P2;
• an absorption tower **(41)** for absorbing the NOₓ gases from the compressed NOₓ gas stream **(24)** in water, to produce a stream of raw nitric acid-containing residual NOₓ gas **(27)** and a tail gas **(5)** comprising NOₓ gases, comprising an absorption tower tail gas outlet **(6)** for evacuating the tail gas **(5);**
• means for measuring the concentration of oxygen in the tail gas (5) in a tail gas stream downstream the absorption tower **(41);**
• a heat exchange system **(43)** for exchanging heat between the NOₓ/gas steam mixture **(15)** and the tail gas **(5);**
• an additional gas cooler/condenser **(39)** for separating and condensing steam from the compressed NOₓ gas stream **(24),** to produce a compressed NOₓ gas stream **(24)** having a temperature ranging from 20 to 60 °C;
• a supply of an oxygen-rich gas **(68)** having either:
• a pressure equal to or higher than P1 and up to P2, for supplying oxygen upstream the NOₓ gas compressor **(40);** or
• a pressure higher than P2, for supplying oxygen to the compressed NOₓ gas stream **(24),**
such that the tail gas **(5)** contains at least 0.5% by volume oxygen; and
• the tail gas expander **(7)** for expanding a stream of tail gas downstream the absorption tower **(41),** to produce a first expanded tail gas **(64)** at a pressure P1, wherein the tail gas expander **(7)** can at least partly power the NOₓ gas compressor **(40)**
into a production plant according to any one of claims 1 to 7, comprising the steps of:
• introducing a source of pressurised air **(65)** in fluid communication with the system;
• introducing a source of an oxygen-rich gas **(50)** upstream the mixing apparatus **(35);**
• introducing means for measuring the oxygen concentration in the oxygen-containing gas **(56);**
• introducing means for adjusting the concentration of oxygen in the oxygen-containing gas **(56)** such that the oxygen to ammonia molar ratio at the inlet of the ammonia converter **(37)** is at least 1.25;
• introducing means for splitting **(55)** a stream of tail gas downstream the absorption tower **(41)** into a first tail gas stream **(10)** in fluid communication with the oxygen-rich gas **(50)** and a second tail gas stream **(80);**
• introducing means for adjusting the amount of tail gas being splitted into the first tail gas stream **(10)** and the second tail gas stream **(80);** and
• removing the air compressor **(36).**
